(19) Europäisches Patentamt
European Patent Office
Office européen des brevets

(11) Numéro de publication : **0 309 317 B1**

(12) # FASCICULE DE BREVET EUROPEEN

(45) Date de publication du fascicule du brevet : **02.01.92 Bulletin 92/01**

(21) Numéro de dépôt : **88402315.1**

(22) Date de dépôt : **14.09.88**

(51) Int. Cl.$^5$ : **C08F 220/22,** C10M 147/04, C10M 149/04, C10M 149/06, C10M 151/02, C10M 153/02, C08F 220/12, C08F 220/28, C08F 220/38, C08F 230/02

(54) **Copolymères utilisables notamment comme additifs multifonctionnels aux lubrifiants et compositions renfermant lesdits copolymères.**

(30) Priorité : **16.09.87 FR 8712822**

(43) Date de publication de la demande : **29.03.89 Bulletin 89/13**

(45) Mention de la délivrance du brevet : **02.01.92 Bulletin 92/01**

(84) Etats contractants désignés : **BE DE GB IT NL**

(56) Documents cités :
**EP-A- 0 213 412**
**DE-B- 1 236 787**
**DE-B- 1 300 677**
**US-A- 3 808 179**
**US-A- 4 136 042**
**US-A- 4 394 134**

(73) Titulaire : **SOCIETE NATIONALE ELF AQUITAINE**
**Tour Elf, 2, Place de la Coupole, La Défense 6**
**F-92400 Courbevoie (FR)**

(72) Inventeur : **Germanaud, Laurent**
**79, Route Neuve**
**F-69540 Irigny (FR)**
Inventeur : **Azorin, Patrick**
**13, Boulevard de l'Europe**
**F-69600 Oullins (FR)**
Inventeur : **Lhopital, Michel**
**Le Grillon-Bât A.**
**F-69340 Francheville (FR)**
Inventeur : **Truong Dinh, Niguyen**
**10 Avenue du Général Leclerc**
**F-64000 Pau (FR)**

(74) Mandataire : **Boillot, Marc**
**SOCIETE NATIONALE ELF AQUITAINE**
**Division Propriété Industrielle Tour Elf**
**F-92078 Paris la Défense Cédex 45 (FR)**

EP 0 309 317 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

L'invention concerne des copolymères utilisables notamment comme additifs multifonctionnels aux lubrifiants. Ils présentent des propriétés d'améliorants de viscosité, d'antiusure et de dispersant.

Ces copolymères sont formés par copolymérisation d'un ester d'un acide monocarboxylique insaturé et d'au moins un monomère acrylique renfermant des atomes de fluor et/ou de phosphore et éventuellement de l'azote.

La présente invention concerne des copolymères utilisables notamment comme additifs multifonctionnels aux lubrifiants.

Les copolymères selon l'invention améliorent l'indice de viscosité, augmentent la viscosité, diminuent le point de congélation des lubrifiants d'origine minérale ou synthétique. Au même temps ils exercent une action anti-usure et dispersante.

Les copolymères acryliques s'utilisent depuis longtemps pour améliorer la viscosité des huiles lubrifiantes. Ils sont obtenus par polymérisation des acrylates et méthacrylates à chaîne longue ou par copolymérisation de ces esters avec d'autres monomères. Ces (meth)acrylates à chaîne longue se préparent par transestérification des (meth)acrylates de méthyle ou d'éthyle par des alcools supérieurs ou par estérification directe des acides (meth)acryliques avec des alcools supérieurs.

Pour être parfaitement solubles dans les huiles minérales, ces alcools contiennent généralement au moins 6 atomes de carbone en moyenne. Il est admis que les poly(méth)acrylates d'alkyle en $C_7$ à $C_{14}$ en moyenne améliorent efficacement l'indice de viscosité des huiles. Par ailleurs les poly(méth)acrylates dont les chaînes alkyles contiennent un nombre moyen d'atomes de carbone supérieur à 14 présentent des propriétés d'écoulement à basse température insuffisantes.

On utilise en général des polymères issus d'un ou plusieurs (méth)acrylates d'alkyle choisis de telle façon que le nombre moyen d'atomes de carbone de la chaîne alkyle soit compris entre 5 et 15 et de préférence entre 8 et 13. De tels produits sont décrits dans le brevet EP 253209.

On associe le plus souvent aux (méth)acrylates d'alkyle d'autres additifs destinés à renforcer les propriétés dispersantes des huiles.

Ces additifs assurant le maintien de la propreté du carter sont d'une part les détergents tels que sulfonates, phénates ou phosphates organiques de métal polyvalent, particulièrement efficaces pendant le fonctionnement à chaud des lubrifiants, d'autre part les dispersants tels que les succinimides ou esters succiniques alkylés par un polymère de l'isobutène ou du propène sur le carbone en alpha du carbonyle de la succinimide. Ces additifs agissent plus particulièrement pendant le fonctionnement du moteur à basse et à moyenne température.

On a proposé également des copolymères destinés à assurer simultanément l'amélioration de l'indice de viscosité des huiles et la dispersion des boues qu'elles peuvent renfermer. De tels copolymères sont généralement obtenus par introduction de monomères dispersants azotés, soit par greffage sur un polymère épaississant, soit par copolymérisation avec des (méth)acrylates d'alkyle. Les monomères dispersants azotés sont de préférence choisis parmi les maléimides, vinylimidazoles, vinylpyrrolidones, vinylpyridines ou N,N-dialkylaminoalkylméthacrylates ou N,N dialkylaminoalkylméthacrylamides. Les brevets suivant revendiquent la préparation et l'utilisation de tels composés : EP 171167, EP 167195, EP 164807, EP 145369, US 4606834, US 3372334, BE 874068.

Il est connu que les polymères ou les composés organiques de poids moléculaire élevé ont tendance à s'adsorber au cours du temps, sur les surfaces métalliques en déplaçant les molécules de faible taille et plus particulièrement les additifs anti-usure. Ainsi les concentrations en additifs anti-usure au voisinage de la surface métallique diminuent, pouvant entraîner une diminution de la protection des surfaces et de ce fait une accélération des phénomènes d'usure dans la mesure ou les polymères qui s'adsorbent sur les surfaces ne possèdent pas de propriétés anti-usure. Pour palier cet inconvénient on a proposé dans l'art antérieur des composé bifonctionnels, en particulier des polymères améliorants de viscosité et anti-usure.

Le brevet EP 164807 mentionne le greffage de deux monomères, l'un contenant de l'azote, l'autre contenant de l'azote et du soufre sur un polyméthacrylate. Ce greffage apporte des propriétés anti-usure et anti-corrosion au polymère.

Le brevet US 4502972 décrit la préparation et l'utilisation comme additif lubrifiant d'un polymère obtenu par traitement d'un terpolymère éthylène-propylène-diène avec le chlore suivi d'une réaction avec un N,N-dialkyldithiocarbamate de sodium.

Le brevet US 4139480 indique la préparation de copolymères méthacrylates d'alkyle — chlorométhylstyrène sur lesquels on condense des amines. Le polymère, de par la nature de ses fonctions amines, est compatible avec les additifs anti-usure classiques tels que les dithiophosphates.

Les brevets US 4148981 et 4136042 décrivent la préparation et l'application de copolymères méthacrylates

d'alkyle-acrylate d'éthylaziridine modifiés par ouverture du cycle aziridine par un acide dialkyldithiophosphorique. Les produits sont des améliorants de viscosité et anti-usure sans cendres.

L'emploi d'additifs multifonctionnels permettrait d'éviter les problèmes de compatibilité des additifs et de simplifier la formulation des compositions lubrifiantes. En effet, les formulateurs sont de plus en plus à la recherche d'additifs multifonctionnels.

Les copolymères selon l'invention répondent à cet objectif. Ils présentent des propriétés d'améliorants de viscosité, d'anti-usure et de dispersant.

Les copolymères selon l'invention, utilisables notamment comme additifs multifonctionnels aux lubrifiants sont formés par copolymérisation d'un ester d'un acide monocarboxylique insaturé et d'au moins un monomère acrylique choisi dans le groupe formé par :

$$- CH_2 = CR - CO - O - (CH_2)_a - R_F \qquad (I)$$

4

où R est un atome d'hydrogène ou le radical méthyle

- a est un nombre entier compris entre 1 et 4 et de préférence égal à 2
- $R_F$ désigne un radical perfluoré, de préférence un radical perfluoroalkyle, linéaire ou ramifié, en $C_2$ à $C_{20}$, et plus particulièrement, un radical perfluoroalkyle linéaire en $C_6$ à $C_{20}$

et

$$—CH_2 = CR\text{-}CO\text{-}O\text{-}CH_2\text{-}CH(OH)\text{-}CH_2\text{-}X\text{-}(CH_2)_a\text{-}R_F \qquad (II)$$

où R, a et $R_F$ ont la signification précitée

X représente soit un atome d'oxygène ou de soufre soit le groupe —N-$CH_2$-$CH_2OH$.

Pour renforcer les propriétés dispersantes du copolymère on peut y introduire un monomère azoté de formule générale :

$$—CH_2 = CR\text{-}CO\text{-}Y\text{-}R_3\text{-}NR_4\, R_5$$

où R a la signification précitée

- Y représente un groupe —NH— ou un atome d'oxygène ou de soufre
- $R_3$ est un groupe alkylène en $C_2$ à $C_6$
- $R_4$ et $R_5$ identiques ou différents sont des radicaux alkyle, cycloalkyle, alkylaryle ou aryle, de préférence des radicaux méthyle ou éthyle.

Les esters des acides monocarboxyliques insaturés sont formés avec les alcools en $C_1$ à $C_{18}$ et de préférence en $C_6$ à $C_{18}$.

L'acide insaturé est en général l'acide acrylique ou l'acide méthacrylique, nous les désignons comme acides (méth)acryliques.

On peut citer comme exemples les (méth)acrylates de méthyle, éthyle, n-butyle, éthyle-2-hexyle, octyle, décyle, dodécyle, n-tétradécyle, n-hexadécyle et n-octadécyle. On utilisera le plus souvent un mélange industriel de plusieurs méthacrylates d'alkyle ayant des chaînes alkyles de longueur variable, pour assurer de bonnes propriétés viscosifiantes et un bon comportement du polymère à basse température.

Dans un tel cas, le mélange sera choisi de telle sorte que le nombre moyen d'atomes de carbone dans la chaîne alkyle soit compris entre 8 et 13.

Les monomères fluorés de formule générale I sont généralement obtenus par estérification de l'acide (méth)acrylique avec un alcool fluoré ou de préférence un mélange d'alcools fluorés. On opère le plus souvent dans un solvant aromatique tel que le toluène ou le xylène pour éliminer l'eau formée par distillation azéotropique, et en présence d'un inhibiteur de polymérisation tel que le monométhyléther de l'hydroquinone. Une autre façon d'obtenir ces alcools fluorés est de transestérifier les esters méthyliques et éthyliques des acides (méth)acryliques avec les alcools fluorés en présence d'un catalyseur tel que l'acide borique, l'acide paratoluènesulfonique ou encore le tétra-n-butyltitane.

Les monomères fluorés de formule générale II sont obtenus par condensation d'un composé fluoré à hydrogène labile de formule générale $R_F$-$(CH_2)_a$-X-H sur le (méth)acrylate de glycidyle.

Il est particulièrement avantageux d'utiliser pour des raisons économiques, les mélanges industriels de composés fluorés, en particulier les mélanges industriels d'amines polyfluorées saturées et insaturées ayant des radicaux $R_F$ différents tels que ceux décrits dans les brevets FR 93239 et 2205894.

Comme exemples de monomères azotés on peut citer le N,N-diméthylaminopropylméthacrylamide, le N,N-diéthylaminopropylméthacrylamide, le N,N-diméthylaminoéthylméthacrylamide, le N,N-diéthylaminoéthylméthacrylamide, le N,N-diméthylaminoéthylméthacrylate ou le N,N-diéthylaminoéthylméthacrylate.

Les copolymères selon l'invention renferment généralement un monomère fluoré, répondant à la formule générale I ou II. Les monomères azotés sont utilisés en mélange avec des précédents.

Le copolymère renferme 0,01 à 20% et de préférence 0,5 à 15% poids de monomères fluorés. Il renferme éventuellement 0,1 à 15% et de préférence 1 à 10% poids de monomère azoté.

Sa masse moléculaire moyenne en poids est comprise entre 10000 et 500000, de préférence entre 50000 et 200000.

La préparation du polymère peut être effectuée selon les méthodes classiques de polymérisation par voie radicalaire en solution, par exemple en présence d'un amorceur de type azobisisobutyronitrile ou péroxyde, notamment le péroxyde de benzoyle ou le péroxyde de lauroyle et d'un agent de transfert de chaine de type mercaptan comme le dodécanethiol. Le solvant utilisé peut être un solvant aromatique comme le toluène ou les xylènes ou le plus généralement une huile minérale ou synthétique de même nature que celle de l'huile à laquelle le polymère doit être ajouté.

La quantité de solvant utilisé sera en général telle que la concentration pondérale en matière sèche en fin de réaction, se situe entre 25 et 75%, et de préférence au voisinage de 50%.

La réaction de copolymérisation est effectuée en présence de l'amorceur radicalaire à une température comprise entre 40 et 120°C, et de préférence entre 60 et 100°C.

Selon les conditions opératoires, la durée de la réaction peut varier de 2 à 10 heures, de préférence de 3 à 5 heures. On obtient une solution de copolymère sous la forme d'un liquide visqueux.

Pour obtenir des copolymères qui renferment des monomères II issus de l'acrylate de glycidyle on opère de préférence en deux étapes. On condense dans une première étape un composé fluoré $R_F(CH_2)_a$-X-H sur le méthacrylate de glycidyle à une température comprise entre 20 et 100°C en absence de solvant ou dans un solvant tel que les alcools ou les dérivés halogénés comme le dichlorométhane ou le chloroforme. Dans une seconde étape on copolymérise les produits de condensation avec un ester d'un acide insaturé en général un (méth)acrylate d'alkyle et éventuellement un monomère azoté selon les conditions opératoires décrites précédemment.

Les compositions lubrifiantes renfermant une huile lubrifiante d'origine minérale ou synthétique et 1 à 20% et de préférence 2 à 10% de copolymère selon l'invention, ont une teneur en fluor comprise entre 1 et 10000 ppm et de préférence entre 10 et 2000 ppm et/ou une teneur en phosphore comprise entre 1 et 10000 ppm et de préférence entre 10 et 3000 ppm en poids.

L'efficacité des copolymères dans les compositions lubrifiantes est évaluée par mesure de l'indice de viscosité selon la norme NF T 60-100 et leur effet anti-usure a été déterminé à l'aide de la machine 4 billes extrême pression de SHELL. La description de ce test figure dans l'"Annual Book of ASTM Standards" Part 24 pages 680 à 683 (1979).

Les exemples suivants illustrent l'invention.

EXEMPLE A

Dans cet exemple, on décrit la préparation du monomère correspondant à la formule II de la présente invention.

EXEMPLE A.

Dans un réacteur muni d'une agitation, on introduit 150 g (1,05 mole) de méthacrylate de glycidyle et on additionne à température ambiante 490 g (1.05 mole) d'un mélange industriel d'aminoalcools fluorés saturés et insaturés de formules :

$C_nF_{2n+1}$-$CH_2$-$CH_2$-NH-$CH_2CH_2OH$ et $C_{n-1}F_{2n-1}CF = CH$-$CH_2$-NH-$CH_2CH_2OH$

où n est égal à 6, 8, 10, 12 et 14 dans des pourcentages pondéraux respectifs de 56,2%, 27,2%, 12,3%, 3,7% et 0,6%. Ce mélange dont la masse moléculaire moyenne est de 466 contient environ 65% molaire d'aminoalcools saturés et 35% molaire d'aminoalcools insaturés. On porte le mélange à 80°C et on le maintient à cette température pendant 4 heures. Après refroidissement on obtient 635 g d'un liquide visqueux de couleur rouge que l'on caractérise par infrarouge (bande d'absorption à 3500 $cm^{-1}$ (—OH) et 1650 cm $^{-1}$(c = c), disparition des bandes d'absorption de la fonction époxyde à 3050 $cm^{-1}$.

EXEMPLE I à IV

Dans ces exemples on décrit la préparation des polymères de l'invention.

EXEMPLE I

Dans un réacteur équipé d'un système d'agitation, d'une arrivée d'azote, d'un thermomètre, on introduit 40 g (0,118 mole) de méthacrylate de stéaryle, 91 g (0,358 mole) de méthacrylate de lauryle, 2,1 g (0,004 mole) de méthacrylate de (perfluorooctyl)-2-éthyle, 0,09 g de dodécanethiol et 108 g d'huile 200 N.

Le mélange est porté à 80-85°C et on ajoute une première portion d'azobisisobutyronitrile ($AIBN_{(1)}$ = 0,265 g). L'ensemble est maintenu à cette température sous azote jusqu'à obtenir un indice de réfraction constant (environ 3 heures.). On ajoute alors une deuxième portion d'azobisisobutyronitrile ($AIBN_{(2)}$ = 0,05 g) et 25 g d'huile 200N et on maintient le tout pendant 2 heures à 80°C sous $N_2$, puis 1 heure sous un vide de 20 mm de Hg environ. On obtient après refroidissement l'additif I qui est une solution à 50% d'un copolyméthacrylate contenant environ 0,96% poids de fluor.

EXEMPLE II

On opère comme dans l'exemple I mais en utilisant les monomères suivants :

| | |
|---|---|
| méthacrylate de stéaryle | 49g (0,118 mole) |
| méthacrylate de lauryle | 91,8g (0,361 mole) |

Le produit de cette réaction constitue l'additif II qui est une solution à 50% dans l'huile d'un copolymère contenant 0,618% poids de fluor.

EXEMPLE III

Les monomères ci-dessous sont copolymérisés selon l'exemple I pour obtenir l'additif V

| | |
|---|---|
| - méthacrylate de stéaryle | 40g (0,118 mole) |
| - méthacrylate de lauryle | 82,5g (0,325 mole) |

— méthacrylate de N,N-diméthylamino-2-éthyle 8 g (0,051 mole)

— méthacrylate de perfluorooctyl-2-éthyle 2,6 g

Le produit de cette réaction constitue l'additif III qui est une solution à 50% d'un polyméthacrylate contenant 1,19% de fluor et environ 0,54% d'azote en poids.

EXEMPLE IV

On copolymérise selon l'exemple I, les monomères suivants :

| | |
|---|---|
| - méthacrylate de stéaryle | 40g (0,118 mole) |
| - méthacrylate de lauryle | 82,5g (0,325 mole) |

— méthacrylate de (N,N diméthylamino)-2-éthyle 8 g(0,051 mole)

— monomère préparé selon l'exemple A 2,6 g

La réaction est initiée avec 0,22 g d'$AIBN_{(1)}$ Le produit de cette réaction constitue 1 additif IV qui est une

solution à 50% d'un copolymère contenant 1,21% de fluor et 0,54% d'azote en poids.

EXEMPLES V et VI

Les exemples suivants, ont été préparés à titre de référence car ils ne contiennent ni de fluor, ni de phosphore.

EXEMPLE V

On prépare un copolymère selon l'exemple I, en utilisant 0,215 g d'AIBN, à partir des monomères suivants:

- méthacrylate de stéaryle 40g (0,118 mole)
- méthacrylate de lauryle 93g (0,366 mole).

Le produit de cette réaction constitue l'additif V qui est une solution à 50% d'un polyméthacrylate.

EXEMPLE VI

On prépare un copolymère selon l'exemple I, en utilisant les monomères suivants :

- méthacrylate de stéaryle 40g (0,118 mole)
- méthacrylate de lauryle 85,3g (0,336 mole)

—méthacrylate de(N,N diméthylamino)-2 éthyle 8 g (0,051 mole)

Le produit de cette réaction constitue l'additif VI qui est une solution à 50% d'un copolyméthacrylate contenant 0,55% d'azote en poids.

EXEMPLE VII

Dans cet exemple, on étudie l'effet des additifs de l'invention sur l'indice de viscosité des huiles lubrifiantes, dans les conditions de la norme NT T 60-100, à l'aide d'un viscomètre CANNON-FENSKE à partir de compositions lubrifiantes obtenues par addition de 4% en poids des additifs de l'invention (soit 2% en poids de matière active) à une huile "150 Neutral" (huile paraffinique neutre présentant une viscosité égale à 33. $10^{-6}m^2/s$ à 36,8°C et 5,34. $10^{-6}m^2/s$ à 98,9°C et un indice de viscosité égal à 105).

TABLEAU 1

| | Huile 150 N + 4% d'additif | | |
|---|---|---|---|
| | viscosité à 36,8°C en $10^{-6}m^2/s$ | viscosité à 98,9°C en $10^{-6}m^2/s$ | $VI_E$ |
| I | 47,93 | 8,40 | 152 |
| II | 49,73 | 8,42 | 145 |
| IV | 45,14 | 7,87 | 145 |
| V | 49,48 | 8,35 | 144 |
| VI | 43,17 | 7,47 | 140 |

On rappelle que l'indice de viscosité d'une huile est un nombre caractérisant la variation de la viscosité de cette huile en fonction de la température dans une échelle conventionnelle. Ledit indice est d'autant plus élevé que cette variation est plus faible.

L'incorporation des additifs suivant l'invention à l'huile lubrifiante améliore de façon sensible l'indice de viscosité de cette huile. En outre en comparant les résultats obtenus avec les polymères de référence V et VI, on peut constater que les polymères de l'invention ont un effet sur l'indice de viscosité qui est égal ou supérieur à ceux des polymères témoins.

EXEMPLE VIII

Dans cet exemple le pouvoir anti-usure de compositions lubrifiantes contenant comme huile de base l'huile minérale 200 Neutral Solvent et comme additif un polymère de l'invention a été déterminé à l'aide de la machine 4 billes EP de SHELL dont la description figure dans "ANNUAL BOOK OF ASTM STANDARDS" Part 24/1979 pages 680 à 688.

Le test consiste à faire tourner une bille de 12 mm de diamètre avec une vitesse de rotation de 1500 tr/mn sur trois autres billes maintenues immobiles et couvertes du lubrifiant à étudier. Une charge de 60 ou 60 daN est appliquée par un système de levier qui pousse les trois billes fixes vers la bille supérieure placée dans un mandrin.

L'efficacité anti-usure d'un lubrifiant est déterminée par la valeur moyenne des diamètres des empreintes d'usure sur les trois billes fixes, après une heure de fonctionnement. Le tableau 2 ci-dessous rassemble l'ensemble des résultats obtenus avec différents produits de l'invention testés à une teneur pondérale de 8% ou 16% (soit 4% ou 8% de matière active). Pour chaque composition les teneur en F et en P sont indiquées.

TABLEAU 2

| Additif | Teneur dans l'huile (%) | Teneur en F dans l'huile (ppm) | Teneur en P dans l'huile (ppm) | O (mm) 1heure 40daN | O (mm) 1heure 60daN |
|---|---|---|---|---|---|
| Temoin | 0 | 0 | 0 | 1,56 | 2,28 |
| I | 8 | 476 | 0 | 1,40 | 2,01 |
| II | 8 | 247 | 0 | 1,35 | 1,95 |
| IV | 8 | 476 | 0 | 0,38 | - |
| | 16 | 950 | 0 | 0,37 | 0,47 |
| V | 8 | 0 | 0 | 0,86 | 1,94 |
| | 16 | 0 | 0 | 0,81 | 1,80 |
| VI | 8 | 0 | 0 | 0,74 | 2,00 |
| | 16 | 0 | 0 | 0,67 | 1,87 |

Dans tous les cas les empreintes d'usure obtenues lors des essais avec les polymères de l'invention sont circulaires et uniformes et, sont particulièrement faibles lorsque l'on utilise des polymères contenant du fluor et de l'azote.

## Revendications

1. Utilisation comme additifs multifonctionnels aux lubrifiants de copolymères d'un ester d'un acide monocarboxylique insaturé et d'au moins un monomère acrylique choisi dans le groupe formé par

$$—CH_2 = CR\text{-}CO\text{-}O(CH_2)_aR_F \quad (I)$$

où R est un atome d'hydrogène ou le radical méthyle, a est un nombre entier compris entre 1 et 4, $R_F$ est un radical perfluoré et

$$—CH_2 = CR\text{-}CO\text{-}O\text{-}CH_2\text{-}CH(OH)\text{-}CH_2\text{-}X(CH_2)_aR_F \quad (II)$$

où R, a et $R_F$ ont la signification précitée et X représente soit un atome d'oxygène ou de soufre, soit le groupe $—N\text{-}CH_2\text{-}CH_2\text{-}OH$.

2. Utilisation selon la revendication 1 caractérisée en ce que le copolymère renferme un monomère azoté de formule générale

$$—CH_2 = CR\text{-}CO\text{-}Y\text{-}R_3NR_4R_5$$

où R a la signification précitée, Y représente un atome d'oxygène ou de soufre ou le groupe —NH—, $R_3$ est un groupe alkylène renfermant 2 à 6 atomes de carbone, $R_4$ et $R_5$, idendiques ou différents sont des radicaux alkyle, cycloalkyle, alkylaryle ou aryle.

3. Utilisation selon la revendication 1 ou 2 caractérisée en ce que dans la formule générale (I) a est égal

à 2.

4. Utilisation selon l'une des revendiations 1 à 3 caractérisée en ce que dans la formule générale (I) $R_F$ est un radical perfluoroalkyle, linéaire ou ramifié en $C_2$ à $C_{20}$ et de préférence un radical perfluoroalkyle linéraire en $C_6$ à $C_{20}$.

5. Utilisation selon l'une des revendications 1 à 4 caractérisée en ce que l'ester de l'acide monocarboxylique insaturé est formé avec des alcools en $C_1$ à $C_{18}$ et de préférence en $C_6$ à $C_{18}$.

6. Utilisation selon l'une des revendications 1 à 5 caractérisée en ce que l'acide monocarboxylique insaturé est l'acide acrylique ou méthacrylique.

7. Utilisation selon l'une des revendiations 1 à 6 caractérisée en ce que le copolymère renferme 0,01 à 20% poids et de préférence 0,5 à 15% poids de monomères fluorés.

8. Utilisation selon l'une des revendications 1 à 7 caractérisée en ce que le copolymère renferme 0,1 à 15% et de préférence 1 à 10% poids de monomère azoté.

9. Utilisation selon l'une des revendications 1 à 8 caractérisée en ce que la masse moléculaire moyenne en poids du copolymère est comprise ente 10000 et 500000 et de préférence entre 50000 et 200000.

10. Utilisation selon l'une des revendiations 1 à 9 caractérisée en ce que le copolymère est préparé par polymérisation radicalaire en solution.

11. Composition lubrifiante, caractérisée en ce qu'elle renferme une huile lubrifiante d'origine minérale ou synthétique et 1 à 20% et de préférence 2 à 10% poids d'un copolymère d'un ester d'un acide monocarboxylique insaturé et d'au moins un monomère acrylique choisi dans le groupe formé par

$$—CH_2 = CR\text{-}CO\text{-}O(CH_2)_aR_F \quad (I)$$

où R est un atome d'hydrogène ou le radical méthyle, a est un nombre entier compris entre 1 et 4, $R_F$ est un radical perfluoré et

$$—CH_2 = CR\text{-}CO\text{-}O\text{-}CH_2\text{-}CH(OH)\text{-}CH_2\text{-}X(CH_2)_aR_F \quad (II)$$

où R, a et $R_F$ ont la signification précitée et X représente soit un atome d'oxygène ou de soufre, soit le groupe $—N\text{-}CH_2\text{-}CH_2\text{-}OH$

12. Composition selon la revendication 11 caractérisée en ce que le copolymère renferme un monomère azoté de formule générale

$$—CH_2 = CR\text{-}CO\text{-}Y\text{-}R_3NR_4R_5$$

où R a la signification précitée, Y représente un atome d'oxygène ou de soufre ou le groupe —NH—, $R_3$ est un groupe alkylène renfermant 2 à 6 atomes de carbone, $R_4$ et $R_5$ identiques ou différents sont des radicaux alkyle, cycloalkyle, alkylaryle ou aryle.

13. Composition selon la revendication 11 ou 12 caractérisée en ce que dans la formule générale (I) a est égal à 2.

14. Composition selon l'une des revendications 11 à 13 caractérisée en ce que dans la formule générale (I) $R_F$ est un radical perfluoroalkyle, linéaire ou ramifié en $C_2$ à $C_{20}$ et de préférence un radical perfluoroalkyle linéaire en $C_6$ à $C_{20}$.

15. Composition selon l'une des revendications 11 à 14 caractérisée en ce que l'ester de l'acide monocarboxylique insaturé est formé avec de alcools en $C_1$ à $C_{18}$ et de préférence en $C_6$ à $C_{18}$.

16. Composition selon l'une des revendications 11 à 15 caractérisée en ce que l'acide monocarboxylique insaturé est l'acide acrylique ou méthacrylique.

17. Composition selon l'une des revendications 11 à 16 caractérisée en ce que le copolymère renferme 0,01 à 20% poids et de préférence 0,05 à 15% poids de monomères fluorés.

18. Composition selon l'une de revendications 11 à 17 caractérisée en ce que le copolymère renferme 0,1 à 15% poids et de préférence 1 à 10% poids de monomère azoté.

19. Composition selon l'une des revendications 11 à 18 caractérisée en ce que la masse moléculaire moyenne en poids du copolymère est comprise entre 10000 et 500000 et de préférence entre 50000 et 200000.

20. Composition selon l'une des revendications 11 à 19 caractérisée en ce que le copolymère est préparé par polymérisation radicalaire en solution.

21. Composition selon l'une des revendications 11 à 20 caractérisée en ce qu'elle renferme 1 à 10000 ppm et de préférence entre 10 et 2000 ppm de fluor.

## Patentansprüche

1. Verwendung von Copolymerisaten eines Esters einer ungesättigten Monocarbonsäure und wenigstens eines Acrylmonomers, ausgewählt aus der Gruppe

$$—CH_2 = CR\text{-}CO\text{-}O(CH_2)_aR_F \quad (I)$$

worin R ein Wasserstoffatom oder den Methylrest, a eine ganze Zahl zwischen 1 und 4 und $R_F$ einen Perfluorrest bedeuten, und

$$—CH_2 = CR\text{-}CO\text{-}O\text{-}CH_2\text{-}CH(OH)\text{-}CH_2\text{-}X(CH_2)_aR_F, \quad (II)$$

worin R, a und $R_F$ die angeführte Bedeutung haben und X ein Sauerstoff- oder Schwefelatom bedeutet, oder

$$—N\text{-}CH_2\text{-}CH_2\text{-}OH$$

als multifunktionale Zusätze zu Schmiermitteln.

2. Verwendung nach Anspruch 1, dadurch **gekennzeichnet,** daß das Copolymerisat ein Stickstoffmonomer der allgemeinen Formel

$$—CH_2 = CR\text{-}CO\text{-}Y\text{-}R_3NR_4R_5$$

umfaßt, worin R die erwähnte Bedeutung hat, Y ein Sauerstoff- oder Schwefelatom oder die Gruppe —NH— darstellt, $R_3$ eine $C_2$-$C_6$-Alkylengruppe bedeutet und $R_4$ und $R_5$ gleich oder verschieden sind und Alkyl-, Cycloalkyl-, Alkylaryl- oder Arylreste bedeuten.

3. Verwendung nach Anspruch 1 oder 2, dadurch **gekennzeichnet,** daß in der allgemeinen Formel (I) a gleich 2 ist.

4. Verwendung nach einem der Ansprüche 1 bis 3, dadurch **gekennzeichnet**, daß in Formel (I) $R_F$ ein unverzweigter oder verzweigter $C_{2-20}$-Perfluoralkylrest und vorzugsweise ein unverzweigter $C_{6-20}$-Perfluoralkylrest ist.

5. Verwendung nach einem der Ansprüche 1 bis 4, dadurch **gekennzeichnet**, daß der Ester der ungesättigten Monocarbonsäure mit $C_{1-18}$-Alkoholen und vorzugsweise $C_{6-18}$-Alkoholen gebildet ist.

6. Verwendung nach einem der Ansprüche 1 bis 5, dadurch **gekennzeichnet**, daß die ungesättigte Monocarbonsäure Acryl- oder Methacrylsäure ist.

7. Verwendung nach einem der Ansprüche 1 bis 6, dadurch **gekennzeichnet**, daß das Copolymerisat 0,01 bis 20 Gew.-%, vorzugsweise 0,5 bis 15 Gew.-% Fluormonomere enthält.

8. Verwendung nach einem der Ansprüche 1 bis 7, dadurch **gekennzeichnet**, daß das Copolymerisat 0,1 bis 15 Gew.-%, vorzugswseise 1 bis 10 Gew.-% Stickstoffmonomer enthält.

9. Verwendung nach einem der Ansprüche 1 bis 8, dadurch **gekennzeichnet**, daß das Durchschnittsmolekulargewicht des Copolymerisats zwischen 10.000 und 500.000 und vorzugsweise zwischen 50.000 und 200.000 liegt.

10. Verwendung nach einem der Ansprüche 1 bis 9, dadurch **gekennzeichnet**, daß das Copolymerisat hergestellt wird durch Radikalpolymerisation in der Lösung.

11. Schmiermittelzusammensetzung, dadurch **gekennzeichnet,** daß sie ein mineralisches oder synthetisches Schmieröl und 1 bis 20 Gew.-%, vorzugsweise 2 bis 10 Gew.-% Copolymerisat eines Esters und einer ungesättigten Monocarbonsäure und wenigstens eines Acrylmonomers, ausgewählt aus der Gruppe

$$—CH_2 = CR\text{-}CO\text{-}O(CH_2)_aR_F \quad (I)$$

enthält, worin R ein Wasserstoffatom oder den Methylrest, a eine ganze Zahl zwischen 1 und 4 und $R_F$ einen Perfluorrest bedeuten, und

$$—CH_2 = CR\text{-}CO\text{-}O\text{-}CH_2\text{-}CH(OH)\text{-}CH_2\text{-}X(CH_2)_aR_F \quad (II)$$

worin R, a und $R_F$ die angeführte Bedeutung haben und X ein Sauerstoff- oder Schwefelatom bedeutet, oder

$$—N\text{-}CH_2\text{-}CH_2\text{-}OH.$$

12. Zusammensetzung nach Anspruch 11, dadurch **gekennzeichnet,** daß das Copolymerisat ein Stickstoffmonomer der allgemeinen Formel

$$—CH_2 = CR\text{-}CO\text{-}Y\text{-}R_3NR_4R_5$$

umfaßt, worin R die erwähnte Bedeutung hat, Y ein Sauerstoff- oder Schwefelatom oder die Gurppe —NH— darstellt, $R_3$ eine $C_2$-$C_6$-Alkylengruppe bedeutet und $R_4$ und $R_5$ gleich oder verschieden sind und Alkyl-, Cycloalkyl-, Alkylaryl- oder Arylreste bedeuten.

13. Zusammensetzung nach Anspruch 11 oder 12, dadurch **gekennzeichnet,** daß in der allgemeinen Formel (I) a gleich 2 ist.

14. Zusammensetzung nach einem der Ansprüche 11 bis 13, dadurch **gekennzeichnet**, daß in Formel (I) $R_F$ ein unverzweigter oder verzweigter $C_{2-20}$-Perfluoralkylrest und vorzugsweise ein unverzweigter $C_{6-20}$-Perfluoralkylrest ist.

15. Zusammensetzung nach einem der Ansprüche 11 bis 14, dadurch **gekennzeichnet**, daß der Ester der ungesättigten Monocarbonsäure mit $C_{1-18}$-Alkoholen und vorzugsweise $C_{6-18}$-Alkoholen gebildet ist.

16. Zusammensetzung nach einem der Ansprüche 11 bis 15, dadurch **gekennzeichnet**, daß die ungesättigte Monocarbonsäure Acryl- oder Methacrylsäure ist.

17. Zusammensetzung nach einem der Ansprüche 11 bis 16, dadurch **gekennzeichnet**, daß das Copolymerisat 0,01 bis 20 Gew.-%, vorzugsweise 0,5 bis 15 Gew.-% Fluormonomere enthält.

18. Zusammensetzung nach einem der Ansprüche 11 bis 17, dadurch **gekennzeichnet**, daß das Copolymerisat 0,1 bis 15 Gew.-%, vorzugsweise 1 bis 10 Gew.-% Stickstoffmonomer enthält.

19. Zusammensetzung nach einem der Ansprüche 11 bis 18, dadurch **gekennzeichnet**, daß das Durchschnittsmolekulargewicht des Copolymerisats zwischen 10.000 und 500.000 und vorzugsweise zwischen 50.000 und 200.000 liegt.

20. Zusammensetzung nach einem der Ansprüche 11 bis 19, dadurch **gekennzeichnet**, daß das Copolymerisat hergestellt wird durch Radikalpolymerisation in der Lösung.

21. Zusammensetzung nach einem der Ansprüche 11 bis 20, dadurch **gekennzeichnet**, daß sie 1 bis 10.000 ppm und vorzugsweise zwischen 10 und 2000 ppm Fluor enthält.

## Claims

1. Use as multi-purpose additives in lubricants of copolymers of an unsaturated monocarboxylic acid ester and of at least one acrylic monomer selected from the group comprising

$$—CH_2 = CR\text{-}CO\text{-}O(CH_2)_aR_F \quad (I)$$

wherein R is a hydrogen atom or a methyl radical, a is an integer from 1 to 4, $R_F$ is a perfluoride radical and

$$—CH_2 = CR\text{-}CO\text{-}O\text{-}CH_2\text{-}CH(OH)\text{-}CH_2\text{-}X(CH_2)_aR_F \quad (II)$$

wherein R, a and $R_F$ have the meanings indicated above and X is either an oxygen or sulphur atom, or the group $—N\text{-}CH_2\text{-}CH_2\text{-}OH$.

2. Use according to Claim 1, characterised in that the copolymer contains a nitrogenous monomer having the general formula

$$—CH_2 = CR\text{-}CO\text{-}Y\text{-}R_3NR_4R_5$$

wherein R has the meaning given above, Y represents an oxygen or sulphur atom or the group —NH—, $R_3$ is an alkylene group comprising 2 to 6 carbon atoms ; $R_4$ and $R_5$, which can be identical or different, are alkyl, cycloalkyl, alkylaryl or aryl radicals.

3. Use according to Claim 1 or 2, characterised in that in the general formula (I) a is equal to 2.

4. Use according to any one of Claims 1 to 3, characterised in that in the general formula (I) $R_F$ is a $C_2$ to $C_{20}$ linear or branched perfluoroalkyl radical and preferably a $C_6$ to $C_{20}$ linear perfluoroalkyl radical.

5. Use according to any one of Claims 1 to 4, characterised in the unsaturated monocarboxylic acid ester is formed with $C_1$ to $C_{18}$ and preferably $C_6$ to $C_{18}$ alcohols.

6. Use according to any one of Claims 1 to 5, characterised in that the unsaturated monocarboxylic acid is acrylic or methacrylic acid.

7. Use according to any one of Claims 1 to 6, characterised in that the copolymer comprises 0.01 to 20 weight % and preferably 0.5 to 15 weight % of fluoride monomers.

8. Use according to any one of Claims 1 to 7, characterised in that the copolymer comprises 0.1 to 15 weight % and preferably 1 to 10 weight % of nitrogenous monomer.

9. Use according to any one of Claims 1 to 8, characterised in that the average molecular weight of the copolymer is between 10000 and 500000 and preferably between 50000 and 200000.

10. Use according to any one of Claims 1 to 9, characterised in that the copolymer is prepared by radical polymerisation in solution.

11. Lubricant composition, characterised in that it comprises a lubricating oil of mineral or synthetic origin and 1 to 20 weight % and preferably 2 to 10 weight % of a copolymer of an unsaturated monocarboxylic acid ester and of at least one acrylic monomer selected from the group formed by

$$—CH_2 = CR\text{-}CO\text{-}O(CH_2)_aR_F \quad (I)$$

wherein R is a hydrogen atom or a methyl radical, a is an integer from 1 to 4, $R_F$ is a perfluoride radical and

$$—CH_2 = CR\text{-}CO\text{-}O\text{-}CH_2\text{-}CH(OH)\text{-}CH_2\text{-}X(CH_2)_aR_F \quad (II)$$

wherein R, a and $R_F$ have the meanings indicated above and X is either an oxygen or sulphur atom, or the group $—N\text{-}CH_2\text{-}CH_2\text{-}OH$.

12. Composition according to Claim 11, characterised in that the copolymer comprises a nitrogenous monomer having the general formula

$$—CH_2 = CR\text{-}CO\text{-}Y\text{-}R_3NR_4R_5$$

wherein R has the meaning signified above, Y represents an oxygen or sulphur atom or the group —NH—, $R_3$ is an alkylene group comprising 2 to 6 carbon atoms, $R_4$ and $R_5$, which can be identical or different, are alkyl, cycloalkyl, alkylaryl or aryl radicals.

13. Composition according to Claim 11 or 12, characterised in that in the general formula (I) a is equal to 2.

14. Composition according to any one of Claims 11 to 13, characterised in that in the general formula (I) $R_F$ is a $C_2$ to $C_{20}$ branched or linear perfluoroalkyl radical and preferably a $C_6$ to $C_{20}$ linear perfluoroalkyl radical.

15. Composition according to any one of Claims 11 to 14, characterised in that the unsaturated monocarboxylic acid ester is formed with $C_1$ to $C_{18}$ and preferably $C_6$ to $C_{18}$ alcohols.

16. Composition according to any one of Claims 11 to 15, characterised in that the unsaturated monocarboxylic acid is acrylic or methacrylic acid.

17. Composition according to any one of Claims 11 to 16, characterised in that the copolymer comprises 0.01 to 20 weight % and preferably 0.05 to 15 weight % of fluoride monomers.

18. Composition according to any one of Claims 11 to 17, characterised in that the copolymer comprises 0.1 to 15 weight % and preferably 1 to 10 weight % of nitrogenous monomer.

19. Composition according to any one of Claims 11 to 18, characterised in that the average molecular weight of the copolymer is between 10000 and 500000 and preferably between 50000 and 200000.

20. Composition according to any one of Claims 11 to 19, characterised in that the copolymer is prepared by radical polymerisation in solution.

21. Composition according to any one of Claims 11 to 20, characterised in that it comprises 1 to 10000 ppm and preferably 10 to 2000 ppm fluorine.